# EUROPÄISCHE PATENTSCHRIFT

(11) **EP 1 775 243 B1**
(45) Veröffentlichungstag und Bekanntmachung des Hinweises auf die Patenterteilung: **14.12.2011**
(21) Anmeldenummer: 06021213.1
(22) Anmeldetag: 10.10.2006
(51) Int. Cl.: B65G 47/91, B25J 15/06, B66C 1/02

(54) **Greiferkopf mit Vakuumgreifern und Steuerventil eines solchen Greiferkopfes**
Gripping head with vacuum cups and control valve of such a gripping head
Tête de préhension avec ventouses et soupape de commande d'une telle tête de préhension

(30) Priorität: 12.10.2005 AT 16612005
(43) Veröffentlichungstag der Anmeldung: 18.04.2007
(73) Patentinhaber: Trumpf Maschinen Austria GmbH & CO. KG., 4061 Pasching (AT)
(72) Erfinder: Hauser, Markus, Dipl.-Ing., 4794 Kopfing (AT)
(74) Vertreter: Ofner, Clemens

(56) Entgegenhaltungen:
- EP-A- 1 529 606
- DE-U1- 20 012 850

## Beschreibung

Die Erfindung betrifft einen Greiferkopf, wie er im Oberbegriff des Anspruches 1 beschrieben ist, sowie ein Steuerventil, gemäß dem Oberbegriff des Anspruches 4. Ein solcher Greiferkopf und ein solches Steuerventil sind z.B. aus der EP 1 529 606 A1 bekannt.

Aus dem Dokument EP 1 529 606 A1 ist ein Greifkopf mit zumindest zwei Vakuumgreifern, insbesondere für einen Manipulator zur Aufnahme und/oder Handhabung eines Werkteils bekannt. Ein Steuerventil, mit einem eine Regelkammer ausbildenden Ventilgehäuse, ist über einen mit der Regelkammer strömungsverbundenen Eingangskanal und mit einem mit der Regelkammer strömungsverbundenen Ausgangskanal versehen. In der Regelkammer ist ein zwischen einer Schließ- oder Öffnungsstellung einer Durchströmöffnung verstellbarer Ventilkolben angeordnet der mit einem am Ventilgehäuse angeordneten Stellantrieb verstellbar ist. Der Ventilkolben des Steuerventils wird in Schließstellung durch eine Haltekraft des Stellantriebes und/oder durch eine an einem die Durchströmöffnung sperrenden Ventilteller des Ventilkolbens wirkende, durch Unterdruck bewirkte Stellkraft, entgegen der Wirkung einer den Ventilkolben in Öffnungsrichtung beaufschlagenden Federkraft einer Federanordnung gehaltert.

Aus dem Dokument DE 200 12 850 U1 ist ein Saugventil zur Verwendung mit einem zum Halten von Gegenständen dienenden Saugreifer, z.B. Saugnapf, Saugteller oder dgl. mit einer in einem Saugkanal eingeschalteten Ventileinrichtung bekannt. Ein Ventilglied der Ventileinrichtung ist in Abhängigkeit vom Betriebszustand des Sauggreifers zwischen einer Offenstellung oder einer Schließstellung verstellbar. Weiters sind Sensormitteln zur Erfassung der Offenstellung und/oder der Schließstellung des Ventilgliedes vorgesehen, wobei das Ventilglied einen für den Schaltzustand eines in einen elektrischen Signalkreise integrierten Schalters verantwortlichen Stellungsgeber bildet, und sich der Schalter im Inneren des Saugkanals befindet und das Ventilglied unmittelbar den Schaltkontakt des Schalters bildet.

Aus der EP 1 232 990 A2 ist eine Einzelsteuerung für Vakuumgreifer eines mit mehreren der Vakuumgreifer versehenen Greiferkopfes bekannt. Gemäß dieser ist vorgesehen, zu jedem Sauggreifer eine separate Druckleitung zu führen. Eine einzige Druckleitung führt zu einem von der Druckluft aktivierbaren Ejektor, dessen Ejektorausgang am Sauggreifer angeschlossen und dessen Druckluftausgang durch ein steuerbares Ventil verschließbar ist, das über die Druckleitung durch Druckluft verschiedener Stärke betätigbar ist. Dazu ist die Druckleitung über ein Umschaltventil an einer Druckluftleitung mit hohem Arbeitsdruck und einer Druckluftleitung mit deutlich geringerem Abblasdruck umschaltbar angeschlossen. Die Druckleitung mit Arbeitsdruck ist direkt an einem Drucklufterzeuger und die Druckluftleitung mit Abblasdruck ist über ein Sperrventil und einem Druckminderer an dem Drucklufterzeuger angeschlossen. Der Ejektor enthält eine von der Druckluft durchströmte Düse, der die Ejektor-Ausgangsöffnung folgt. Vor der Düse befindet sich ein zu einem Schieber führender Zweitweg. Der Schieber, der mit einer Kraft vorgespannt ist, die einem unter dem Arbeitsdruck liegende Druck entspricht, versperrt den Druckausgang. Die Umschaltventile an den Druckluftleitungen sind dem Arbeitsprogramm der bedienten Arbeitsmaschine entsprechend gesteuert.

Nachteilig dabei ist, dass jeder der Vakuumgreifer über eigene Steuer- und Versorgungsleitungen mit einer zentralen Steuer- und Versorgungseinrichtung leitungsverbunden ist und die Leitungsführung bei einem Mehrgelenksarm einer mit dem Greiferkopf bestückten Manipulationseinrichtung einen hohen technischen Aufwand erforderlich macht.

Aufgabe der Erfindung ist es einen Greiferkopf sowie ein Steuerventil zu schaffen, die einen selektiven und sicheren Betrieb eines Vakuumgreifers eines mit mehreren Vakuumgreifern bestückten Greiferkopfes bei einer Reduzierung von Steuer- und Versorgungsleitungen zu schaffen.

Diese Aufgabe der Erfindung wird durch die im Anspruch 1 wiedergegebenen Merkmale gelöst. Der überraschende Vorteil dabei ist, dass ausgehend von einem Arbeitsprogramm für die Bearbeitung eines Werksteils, der von einem mit mehreren Vakuumgreifern bestückten Greiferkopf eines eine Fertigungseinrichtung zu bedienenden Manipulator aufzunehmen und zu manipulieren ist, eine automatisierte und selektive Ansteuerung der jeweils erforderlichen Vakuumgreifer, mittels jedem Vakuumgreifer zugeordnetem Steuerventil und Stellantrieb erreicht wird, wobei nach Aufnahme des Werkteils die Funktionssicherheit des bzw. der für das Aufnehmen aktivierten Vakuumgreifer gewährleistet ist, wodurch Störfälle wirkungsvoll vermieden werden. Von Vorteil ist auch, dass dadurch ein geringer Strömungswiderstand in der Evakuierphase und damit ein rasches Erreichen des für die Aufnahme des Werkteils erforderlichen Unterdruckniveaus erreicht wird.

Von Vorteil sind dabei auch Ausbildungen, wie in den Ansprüchen 2 und 3 beschrieben, wodurch die Anpassung des Greiferfeldes an den Werkteil einfach vorgenommen werden kann und eine hohe Flexibilität beim Einsatz eines derartigen Greiferkopfes erreicht wird.

Die Aufgabe der Erfindung wird aber auch durch ein Steuerventil, wie es im Anspruch 4 wiedergegeben ist, gelöst. Der überraschende Vorteil dabei ist, dass nach dem Anlegen eines Unterdrucks an den bzw. an Vakuumgreifer eines Greiferkopfes, die für eine Aufnahme und Manipulation eines Werkteils zur Vornahme eines Bearbeitungsvorganges an einer Fertigungseinrichtung erforderlich sind, diese selektiv betrieben werden und nicht erforderliche Vakuumgreifer mittels eines Stellantriebes am Steuerventil deaktiviert werden und die Haltefunktion der aktivierten Vakuumgreifer auch dann gewährleistet ist, wenn eine Haltekraft des Stellantriebes Störungsbedingt ausfälle, wodurch eine Unterbrechung des eingeleiteten Vorganges vermieden wird.

Möglich sind dabei vorteilhafte Ausbildungen, wie in den Ansprüchen 5 und 6 beschrieben, wodurch unterschiedliche Ausbildungen für die Stellantriebe der Steuerventile erreicht werden.

Gemäß den in den Ansprüchen 7 bis 11 beschriebenen, vorteilhaften Weiterbildungen wird ein einfach und kostengünstig zu fertigender Ventilaufbau mit geringen Strömungsverlusten erreicht.

Die in den Ansprüchen 12 und 13 beschriebenen Ausbildungen gewährleisten eine einfache Leitungsführung für eine serielle Anbindung sämtlicher, auf einen Greiferkopf zur Anwendung gelangender Vakuumgreifer an das Unterdrucksystem.

Möglich ist weiter eine Ausbildung nach Anspruch 14, die für eine kompakte und gewichtsparende Ausbildung des Steuerventils mit dem Stellantrieb vorteilhaft ist wodurch ein leichter Aufbau eines Greiferkopfes erreicht wird und durch die Reduzierung bewegter Masse höhere Stellgeschwindigkeiten erzielt werden..

Durch die in den Ansprüchen 15 und 16 beschriebene vorteilhafte Weiterbildung wird eine einfach wirkende Aktivierung der für die Aufnahme des Werkteils vorgesehener Vakuumgreifer, ohne dass diese im Einzelnen durch Steuerungsmaßnahmen mit Energie beaufschlagt werden müssen, erreicht. Damit wird auch der Installationsaufwand für eine Verkabelung und Verrohrung minimiert, wodurch zusätzlich eine Vereinfachung bei der Übertragung von Steuersignalen und Energie über Gelenksanordnungen an einem Manipulatorarm erreicht wird.

Möglich ist dabei eine Ausbildung nach Anspruch 17, wodurch die Öffnungsstellung des Ventilkolbens und damit der Durchströmquerschnitt eines Ringspalts zwischen Ventilteller und Dichtfläche exakt definiert wird.

Die vorteilhafte Ausbildung, wie sie im Anspruch 18 beschrieben ist, gewährleistet eine sichere Schließstellung des Ventilkolbens durch das Vakuum an deaktivierten Vakuumgreifern auch bei störungsbedingtem Ausfall der für die Deaktivierung beaufschlagten Stellantrieben.

Gemäß der im Anspruch 19 beschriebenen vorteilhaften Weiterbildung ist die Öffnungsstellung des Ventilkolbens auch während des Evakuierungsvorganges an dem oder den für das Aufnehmen des Werkteils aktivierten Vakuumgreifer(n) gewährleistet.

Die im Anspruch 20 beschriebene Weiterbildung vereinfacht den Aufbau des Ventilgehäuses wodurch eine wirtschaftliche Fertigung erreicht wird.

Eine vorteilhafte Weiterbildung beschreibt aber auch Anspruch 21, wodurch der Einsatz pneumatisch betätigter Stellantriebe als Variante zu elektrisch betätigten Stellantrieben erreicht wird.

Schließlich ist aber auch eine Ausbildung nach Anspruch 22 vorteilhaft, wodurch eine vereinfachte Leitungsführung zwischen der im Stationärbereich eines Handlinggeräts angeordneten Steuereinrichtung und dem mobilen Greiferkopf erreicht wird.

Zum besseren Verständnis der Erfindung wird diese anhand der in den Figuren dargestellten Ausführungsbeispiele näher erläutert.

Es zeigen:
- Fig. 1 :: einen erfindungsgemässen Greiferkopf in schaubildlicher Darstellung;
- Fig. 2: einen Vakuumgreifer, geschnitten;
- Fig. 3: eine Greiferkopfbestückung mit Vakuumgreifer, geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

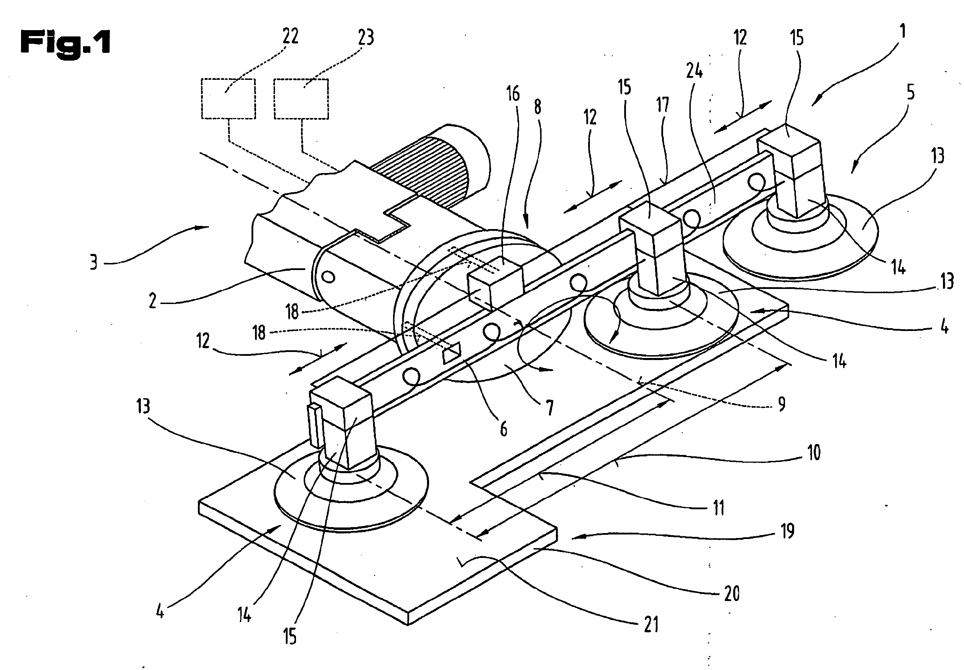

In der Fig. 1 ist ein Greiferkopf 1 an einem Gelenksarm 2 eines nicht weiter im Detail dargestellten Manipulators 3 gezeigt. Der Greiferkopf ist beispielsweise mit zwei Vakuumgreifern 4, 5, die auf einem Greiferträger 6 angeordnet sind, bestückt.

Der Greiferträger 6 ist auf einem am Gelenksarm 2 angeordneten Drehgelenk 7 befestigt, das beispielsweise wie aus dem durch das Dokument WO 03/095125 A1 bekannten Stand der Technik als ein Drehübertrager 8 ausgebildet ist, wodurch die Übertragung von Steuersignalen und die Übertragung von Energie z.B. eines Druckmediums bei Unterbrechung direkter Leitungsverbindung möglich ist und damit eine endlosen Drehbewegung ermöglicht wird. Durch entsprechende Maßnahmen an Leitungsausbildungen sind aber auch direkte Leitungsführungen bei einer Begrenzung des Drehbereiches des Drehgelenkes auf ca. 360° durch Anschläge durchaus möglich.

Die Vakuumgreifer 4, 5 sind am Greiferträger 6 bevorzugt manuell oder auch durch einen Antrieb in einen Abstand 10 zueinander oder in einer Distanz 11 zur Drehachse 9 - gemäß Doppelpfeile 12 - bei Anwendung flexibler Leitungsverbindungen wie vereinfacht dargestellt, verstellbar gelagert.

Jeder der Vakuumgreifer 4, 5 wird durch einen Vakuumsauger 13 und einem Steuerventil 14 mit einem Stellantrieb 15 gebildet. Bevorzugt ist der Stellantrieb 15 ein Elektromagnet . Für die Ansteuerung mit Steuersignalen und/oder Energie ist bevorzugt ein Bus- System, bevorzugt zur Signal- und Energieübertragung, in Anwendung und sind die Stellantriebe 15 mit einem am Greiferträger 6 oder Drehübertrager 8 angeordneten Kontroller 16 über Leitungen 17 verbunden. Der Kontroller 16 ist direkt mit einem Ausgang 18 für Signal- und/oder Energieleitung des Drehübertragers 8 leitungsverbunden.

In der Fig. 1 ist beispielhaft dargestellt, dass von dem mit zwei der Vakuumgreifer 4, 5 bestückten Greifkopf 1 ein zu einer Bearbeitung aufgenommener Werkteil 19, z.B. ein für einen Biegevorgang in einer Biegemaschine, Abkantpresse, etc., vorgesehener, oder auch bereits teilgebogener Blechzuschnitt 20 nur von einem der Vakuumgreifer 4, 5 durch Aufsetzen des Vakuumsaugers 13 auf einer Oberfläche 21 des Werkteils 19 aufgenommen ist. In einem solchen Anwendungsfall wird, wie noch später im Detail ausgeführt, verfahrensgemäß sichergestellt, dass nur der für die Aufnahme erforderliche Vakuumgreifer 4 mit dem Vakuum aus einem nur schematisch angedeuteten Druckerzeuger 22, durch Maßnahmen einer ebenfalls nur schematisch angedeuteten Steuereinrichtung 23, beaufschlagt wird. Dies wird durch entsprechende Ansteuerung des Stellantriebes 15 mittels des Bus-Systems und der erfindungsgemäßen Ausbildung der Steuerventile 14 erreicht.

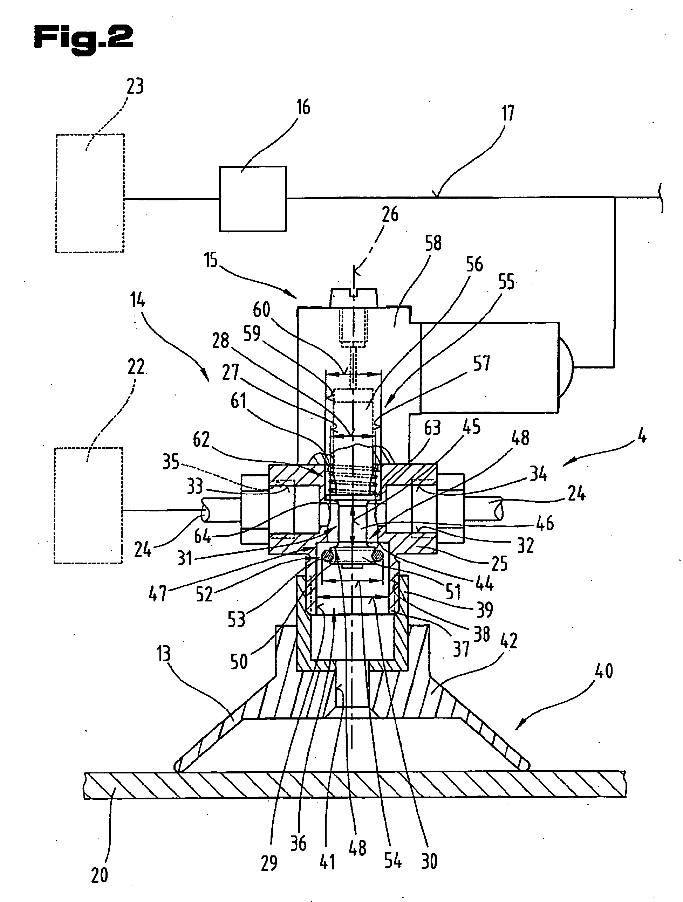

In der Fig. 2 ist der Vakuumgreifer 4, bestehend aus dem Vakuumsauger 13, Steuerventil 14 und dem als Steuermagnet ausgebildeten Stellantrieb 15 gezeigt, wobei sämtliche, auf einem Greiferkopf vorgesehenen Vakuumgreifer identisch ausgebildet sind.

Das gezeigte Ausführungsbeispiel betrifft einen zum Aufnehmen und Manipulieren des Blechzuschnitts 20 aktivierten Sauggreifer 4, bei dem über ein geöffnetes Steuerventil 14 und einer Druckleitung 24 eine Strömungsverbindung zwischen dem Vakuumsauger 13 und dem Druckerzeuger 22 hergestellt ist.

Das Steuerventil 14 besteht aus einem Ventilgehäuse 25, das koaxial zu einer Längsmittelachse 26 eine erste Bohrung 27 mit einem Durchmesser 28 aufweist, die in Richtung des mit dem Ventilgehäuse 25 strömungsverbundenen Vakuumsaugers 13 in eine zweite Bohrung 29 mit einem Durchmesser 30 übergeht, die eine größere Querschnittsfläche ausbildet, als die erste Bohrung 27. Diese erste Bohrung 27 bildet im Ventilgehäuse 25 eine Regelkammer 31 aus, die mit zu der Bohrung 27 senkrechter Richtung verlaufenden, im Ventilgehäuse 25 einander gegenüberliegend, einen Eingangskanal 32 ausbildende Bohrungen 33, 34 strömungsverbunden ist. Die Bohrungen 33, 34 weisen bevorzugt ein Anschlussgewinde 35 für den Anschluss der Druckleitung 24 auf. Die Bohrung 29 bildet einen Ausgangskanal 36 für den Vakuumsauger 13 aus, der auf einem den Verbindungskanal 36 umgrenzenden, ein Außengewinde aufweisenden Rohransatz 37 des Ventilgehäuses 25, der mittels einer, ein Innengewinde aufweisenden Verbindungsmuffe 39, aufgeschraubt ist. Auf dieser Verbindungsmuffe 39 ist eine aus elastischem Material, z.B. Gummi, bestehende Saugglocke 40 befestigt und besteht eine Strömungsverbindung durch eine Bohrung 41 in einem Grundkörper 42 der Saugglocke 40 zwischen dem Ausgangskanal 36 und einer dem aufzunehmenden Blechzuschnitt 20 zugewandten Aushöhlung 43 der Saugglocke 40.

Eine Ventildichtfläche 44 für einen, die Regelkammer 31 in Richtung des Ausgangskanals 36 durchragenden, in Erstreckungsrichtung der Längsmittelachse 26 verstellbar - gemäß Doppelpfeil 45 - angeordneten Ventilkolben 46 bildet in einem Übergangsbereich 47 der Bohrung 27 und Bohrung 29 eine Ringfläche die in einer zur Längsmittelachse 26 senkrecht verlaufenden Ebene angeordnet ist, welche durch die Differenz des Durchmessers 30 des Verbindungskanals 29 und des Durchmessers 28 der Bohrung 27 ausgebildet ist und eine Durchströmöffnung 48 in dem Übergangsbereich 47 umgrenzt.

Der Ventilkolben 46 weist in einem, in den Ausgangskanal 36 einragenden Endbereich 49 einen Flansch 50 auf, der einen Ventilteller 51 ausbildet, und ist am Flansch 50 umfangsseitig ein Dichtring 52, z.B. O-Ring 53, vorgesehen, der in einer Sperrstellung des Ventilkolbens 46 dichtend an der Ventildichtfläche 44 anliegt und in der gezeigten Öffnungsstellung, bei der eine Strömungsverbindung zwischen der Regelkammer 31 und dem Ausgangskanal 36 besteht, in Richtung der Saugglocke 44 verstellt ist und damit die Durchströmöffnung 48 mit einem Ringspalt freigibt.

Da in dieser Stellung der Ventilteller 51 mit dem O-Ring 53 im Verbindungskanal 36 umfangsseitig umströmt wird, ist zur Vermeidung eines hohen Strömungswiderstandes bei der Dimensionierung der Durchmesser 28, 30 darauf zu achten, dass der Ringspalt ausreichend bemessen wird d.h. dass der Durchmesser 30 des Ausgangskanals 36 entsprechend größer ist als ein Außendurchmesser 54 des O-Ringes bzw. in den Querschnittsbemessungen von Regelkammer und 31 und Ausgangskanal 36 dies zu berücksichtigen ist. Jedenfalls ist der durch ein Ansaugen und der damit verbundenen Strömung entstehende Strömungswiderstand kleiner zu halten als eine den Ventilkolben 46 in die Schließstellung beaufschlagende Federkraft.

Der Ventilkolben 46 ist an seinem, dem Ventilteller 51 entgegengesetzten Endbereich 55 mit einem, aus dem Ventilgehäuse 25 ausragenden, zylinderförmigen Ankerfortsatz 56 versehen, der in eine Ankerbohrung 57 eines am Ventilgehäuse 25 direkt befestigten, mit elektrischer Energie ansteuerbaren Steuermagneten 58, der den Stellantrieb 15 ausbildet, einragt.

Weiters wird der Ventilkolben 46 durch eine den Ankerfortsatz 56 im Bereich des Ventilgehäuses 25 in einer Aufnahmebohrung 59, mit einem Durchmesser 60 größer als der Durchmesser 28 der Bohrung 27, mittels einer, durch eine Spiraldruckfeder 61 ausgebildeten Federanordnung 62 in Richtung der Öffnungsstellung vorgespannt, wobei ein Stellweg durch einen Anschlagring 63 am Ventilkolben 46 und einer diesem zugewandten, ringförmigen Anschlagfläche 64 der Bohrung 59 begrenzt ist.

Die beschriebene Ausbildung des Vakuumgreifers 4 mit dem Steuerventil 14, Steuermagnet 58 sieht zwei Schaltstellungen für den Ventilkolben 46 vor, wobei eine Schaltstellung eine Strömungsverbindung zwischen dem Ausgangskanal 36 und damit der Saugglocke 40 und dem Druckerzeuger 22 dadurch bewirkt, dass durch eine Federkraft der Spiraldruckfeder 61 der Federanordnung 62 der Ventilkolben 46 in Öffnungsstellung des Ventiltellers 51, also in Richtung der Saugglocke 40 verstellt ist und damit die Durchströmöffnung 48 freigegeben ist.

Die weiterer Schaltstellung bei der die Durchströmöffnung 48 vom Ventilkolben 46 bzw. Ventilteller 51 verschlossen ist, wird durch die elektrische Beaufschlagung des Steuermagnet 58 erreicht, wodurch der Ventilkolben 46 entgegen der Wirkung der Federkraft der Spiraldruckfeder 61 in die Sperrstellung bei der die Durchströmöffnung 48 durch den Ventilteller 51 versperrt ist, verstellt wird.

Die Sperrstellung wird aber auch durch Saugwirkung des in der Regelkammer 31 wirkenden Vakuums am Ventilteller 51, entgegen der Wirkung der Spiraldruckfeder 61 durch Abstimmung der Federkraft auf die anwirkende Saugkraft gewährleistet und beibehalten, wenn die Haltekraft durch den Steuermagnet 58 z.B. bei Ausfall der Energiebeaufschlagung des Steuermagnets 58 nicht gegeben ist, um einen Störfall im Unterdrucksystem während der Manipulation des Werkteils 19 zu vermeiden.

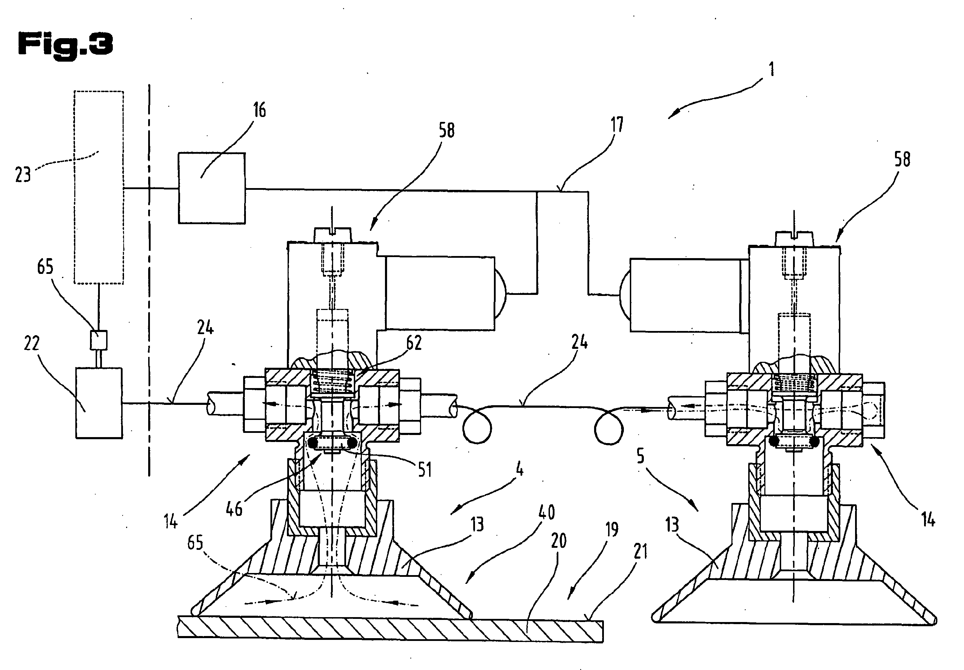

In der Fig. 3 ist eine Situation eines Greiferkopfes 1 mit den für eine Aufnahme des Werkteils 19, z.B. des Blechzuschnittes 20 aktivierten Vakuumgreifer 4 und dem selektiv durch die Steuereinrichtung 23 deaktivierten Vakuumgreifer 5 gezeigt.

Die Steuerventile 14 sind eingangsseitig zum Anlegen eines Vakuums aus dem Druckerzeuger 22 bzw. eines Vakuumerzeugers mit diesem und untereinander direkt über die Druckleitungen 24 verbunden. Die Steuermagnete 58 sind an der Leitung 17 des Bus-Systems angeschlossen und über den Kontroller 16 mit der Steuereinrichtung 23 verbunden.

In Abhängigkeit der Abmessungen und etwaiger Bohrungen, Ausnehmungen, etc. sowie in Abhängigkeit von der Greifposition ist im Fertigungsprogramm für den Werkteil 19 hinterlegt, welche der am Greiferkopf 1 vorgesehenen Vakuumgreifer 4, für den Handhabungsvorgang zu aktivieren bzw. deaktivieren sind, um eine sichere Handhabung mit hoher Energieeffizienz durchzuführen. In der in der Fig. gezeigten Anordnung ist von zwei gezeigten Vakuumgreifern 4, 5 einer für die Aufnahme des Werkteils 19 aktiviert, während der weitere, aufgrund der Konfiguration des Werkteils 19 außerhalb des Greiffeldes liegende, und daher nicht erforderliche Vakuumgreifer deaktiviert ist.

Die Ansteuerung der Vakuumgreifer 4, 5 erfolgt, wie bereits vorhergehend beschrieben, entsprechend den im Arbeitsprogramm für einen Fertigungsvorgang oder einer Reihe von Fertigungsvorgängen an dem Werkteil 19 in der Steuereinrichtung 23 der zu bedienenden Fertigungseinrichtung hinterlegten Daten.

Zum Zeitpunkt des Aufsetzens des Vakuumgreifers 4 auf der Oberfläche 21 des Werkteils 19 ist durch das Arbeitsprogramm vorgegeben, den Steuermagnet 58, des für die Aufnahme zu aktivierenden Vakuumgreifers 4, nicht zu bestromen womit der Ventilkolben 46 des Steuerventils 14, infolge der Federkraft der Spiraldruckfeder 61 in die, die Durchströmöffnung 48 freigebender Stellung, verstellt ist. Der Steuermagnet 58 des zu deaktivierenden Vakuumgreifers 5 ist hingegen bestromt und ist damit die Durchströmöffnung 48 im Steuerventil 14 gesperrt.

Diese selektive Ansteuerung der Stellantriebes 15 erfolgt über die Steuereinrichtung 23 und dem Kontroller 16. Als Bus-System eignet sich insbesondere ein System das für Signal- und Energieübertragung ausgelegt ist, wodurch nur eine gemeinsame Steuer- und Energieleitung 17 als Verbindung zwischen der zentralen und stationären Steuereinrichtung 23 und dem mobilen Greiferkopf 1 erforderlich ist.

Damit ist die Installation, insbesondere im Bezug auf erforderliche Gelenksanordnungen an Gelenksarmen 2 des Manipulators vereinfacht und wird eine hohe Betriebssicherheit erreicht.

Nach dem Anlegen des Vakuums, schaubildlich dargestellt durch Strömungspfeile 65, wird der Werkteil 19 von der Saugglocke 40 angesaugt und somit vom Greiferkopf 1 für die Manipulation aufgenommen.

Ein offener Strömungsquerschnitt - Ringspalt - des Steuerventils 14 des aktivierten Vakuumgreifers 4 ist so gewählt, dass ein bei Anlegen des Vakuums auftretender Strömungswiderstand am Ventilteller 51 zur Verhinderung des Ansaugens des Ventiltellers 51 und damit ein Sperren der Durchströmöffnung 48 kleiner ist, als eine die Öffnungsstellung bewirkende Federkraft der Spiraldruckfeder 61.

Dahingegen ist am deaktivierten Vakuumgreifer 5 durch die Saugwirkung am Ventilteller 51 die Schließstellung des Ventilkolbens 46 auch bei einem störungsbedingten Ausfall der Bestromung des Steuermagneten 58 verlässlich gewährleistet und damit eine unbeabsichtigte Strömungsverbindung zwischen der Umgebungsluft und dem Unterdruckbereich verhindert.

Eine zusätzliche, aus dem Stand der Technik bekannte, Absicherung wird durch die Überwachung des Unterdruckniveaus mittels eines Drucksensors 65 erreicht, der bevorzugt im Bereich des stationären Druckerzeuger 22 vorgesehen ist und mit der ebenfalls im stationären Bereich der Fertigungseinrichtung angeordneten Steuereinrichtung 23 leitungsverbunden ist.

Die gezeigte und beschriebene Ausbildung des Steuerventils 14 mit relativ großen Strömungsquerschnitten gewährleistet einen störungsfreien Betrieb auch beim Auftreten etwaiger Verunreinigungen, die durch den Saugbetrieb in das System eindringen können.

Falls Verunreinigungen im System vorhanden sind werden diese beim Abgeben des Werkteils 20, zu dem die Sauggreifer 4, 5 mit einem Druckluftstoß aus dem Druckerzeuger 22 kurzzeitig beaufschlagt werden, um das Ablösen des Werkteils 19 vom Sauggreifer 4, 5 sicher zu gewährleisten, ausgeblasen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvarianten des Greiferkopfes 1, bzw. Steuerventils 14, wobei an dieser Stelle bemerkt sei, dass die Erfindung nicht auf die speziell dargestellten Ausführungsvarianten derselben eingeschränkt ist.

Der Ordnung halber sei abschließend darauf hingewiesen, dass zum besseren Verständnis des Aufbaus des Greiferkopfes, bzw. Steuerventils dieser bzw. diese sowie die Bestandteile teilweise unmaßstäblich und/oder vergrößert und/oder verkleinert dargestellt wurden.

### Bezugszeichenaufstellung

- 1: Greiferkopf
- 2: Gelenkarm
- 3: Manipulator
- 4: Vakuumgreifer
- 5: Vakuumgreifer

- 6: Greiferträger
- 7: Drehgelenk
- 8: Drehübertrager
- 9: Drehachse
- 10: Abstand

- 11: Distanz
- 12: Doppelpfeil
- 13: Vakuumsauger
- 14: Steuerventil
- 15: Stellantrieb

- 16: Kontroller
- 17: Leitung
- 18: Ausgang
- 19: Werkteil
- 20: Blechzuschnitt

- 21: Oberfläche
- 22: Druckerzeuger
- 23: Steuereinrichtung
- 24: Druckleitung
- 25: Ventilgehäuse

- 26: Längsmittelachse
- 27: Bohrung
- 28: Durchmesser
- 29: Bohrung
- 30: Durchmesser

- 31: Regelkammer
- 32: Eingangskanal
- 33: Bohrung
- 34: Bohrung
- 35: Anschlussgewinde

- 36: Ausgangskanal
- 37: Rohransatz
- 38: Innengewinde
- 39: Verbindungsmuffe
- 40: Saugglocke

- 41: Bohrung
- 42: Grundkörper
- 43: Aushöhlung
- 44: Ventildichtfläche
- 45: Doppelpfeil

- 46: Ventilkolben
- 47: Übergangsbereich
- 48: Durchströmöffnung
- 49: Endbereich
- 50: Flansch

- 51: Ventilteller
- 52: Dichtring
- 53: O-Ring
- 54: Außendurchmesser
- 55: Endbereich

- 56: Ankerfortsatz
- 57: Ankerbohrung
- 58: Steuermagnet
- 59: Aufnahmebohrung
- 60: Durchmesser

- 61: Spiraldruckfeder
- 62: Federanordnung
- 63: Flanschring
- 64: Anschlagfläche
- 65: Drucksensor

## Patentansprüche

1. Greiferkopf (1) mit zumindest zwei Vakuumgreifern (4, 5), insbesondere für einen Manipulator (3) zur Aufnahme und/oder Handhabung eines Werkteils (19), z.B. Blechzuschnitt (20), Blechformteil etc., mit je Vakuumgreifer (4, 5) einem Steuerventil (14), mit einem eine Regelkammer (31) ausbildenden Ventilgehäuse (25) mit zumindest einem mit der Regelkammer (31) strömungsverbundenem Eingangskanal (32) und mit einem mit der Regelkammer (31) strömungsverbundenem Ausgangskanal (36) und mit in der Regelkammer (31) angeordnetem, zwischen einer Schließ- oder Öffnungsstellung einer Durchströmöffnung (48) zwischen der Regelkammer (31) und dem Ausgangskanal (36), verstellbaren Ventilkolben (46) und mit einem am Ventilgehäuse (25) angeordneten Stellantrieb (15) für den Ventilkolben (46) und die Steuerventile (14) zum bewegen eines Vakuums zur Anspeisung der Regelkammern (31) mit dem Druckerzeuger (22) und hintereniander in Serie direkt über Druckleitungen (24) verbunden sind und der Ventilkolben (46) des Steuerventils (14) in Schließstellung durch eine Haltekraft des Stellantriebes (15) und/oder durch eine an einem die Durchströmöffnung (48) sperrenden Ventilteller (51) des Ventilkolbens (46) anwirkende, durch Unterdruck bewirkte Stellkraft, entgegen der Wirkung einer den Ventilkolben (46) in Öffnungsrichtung beaufschlagenden Federkraft, einer Federanordnung (62), gehaltert ist, **dadurch gekennzeichnet, dass** die Regelkammer (31) und der Ausgangskanal (36) durch konzentrische, ineinander übergehende Bohrungen (27, 29) im Ventilgehäuse (25) ausgebildet sind und eine Querschnittsfläche des Ausgangskanals (36) um eine Ringfläche größer ist als die die Durchströmöffnung (48) ausbildende Querschnittsfläche der Regelkammer (31) bei der ein durch einen Unterdruck bewirkter Strömungswiderstand des angesaugten Mediums kleiner ist als eine Federkraft der Federauordnung (62).

2. Greiferkopf (1) nach Anspruch 1, **dadurch gekennzeichnet, dass** die Vakuumgreifer (4, 5) auf einem Greiferträger (6) verstellbar angeordnet sind und über flexible Druckleitungen (24) miteinander strömungsverbunden sind.

3. Greiferkopf (1) nach Anspruch 2, **dadurch gekennzeichnet, dass** der Greiferträger (6) auf einem als Drehübertrager (8) für ein Druckmedium und/oder Steuersignale ausgebildeten Drehgelenk (7) eines Gelenkarmes (2) befestigt ist.

4. Steuerventil (14) für einen Vakuumgreifer (4, 5) eines mit zumindest zwei der Vakuumgreifer (4, 5) versehenen Greiferkopf (1) zur Aufnahme und/oder Handhabung eines Werkteils (19), z.B. Blechzuschnitt (20), Blechformteil etc., mit einem eine Regelkammer (31) ausbildenden Ventilgehäuse (25), mit zumindest einem mit der Regelkammer (31) strömungsverbundenem Eingangskanal (32) und mit einem mit der Regelkammer (31) strömungsverbundenen Ausgangskanal (36) und mit in der Regelkammer (31) angeordnetem, zwischen einer Schließ- oder einer Öffnungsstellung einer Durchströmöffnung (48) zwischen der Regelkammer (31) und dem Ausgangskanal (36), verstellbaren Ventilkolben (46) und mit einem am Ventilgehäuse (25) angeordneten Stellantrieb (15) für den Ventilkolben (46) und das Steuerventil (14) zur Anspeisung der Regelkammer (31) an einer Druckleitung (24) angeschlossen ist und mit einem Druckerzeuger (22) strömungsverbunden ist und der Ventilkolben (46) des Steuerventils (14) in Schließstellung durch eine Haltekraft des Stellantriebes (15) und/ oder durch eine an einem die Durchströmöffnung (48) sperrenden Ventilteller (51) des Ventilkolbens (46) anwirkende, durch Unterdruck bewirkte Stellkraft, entgegen der Wirkung einer den Ventilkolben (46) in Öffnungsrichtung beaufschlagenden Federkraft einer Federanordnung (62) gehaltert ist, **dadurch gekennzeichnet, dass** die Regelkammer (31) und der Ausgangskanal (36) durch konzentrische, ineinander übergehende Bohrungen (27, 29) im Ventilgehäuse (25) ausgebildet sind und eine Querschnittsfläche des Ausgangskanals (36) um eine Ringfläche größer ist als die die Durchströmöffnung (48) ausbildende Querschnittsfläche der Regelkammer (31) bei der ein durch einen Unterdruck bewirkter Strömungswiderstand des angesaugten Mediums kleiner ist als eine Federkraft der Federanordnung (62).

5. Steuerventil (14) nach Anspruch 4, **dadurch gekennzeichnet, dass** der Stellantrieb (15) durch einen elektrisch beaufschlagbaren, am Ventilgehäuse angeordnetem Steuermagnet (58) gebildet ist.

6. Steuerventil (14) nach Anspruch 4, **dadurch gekennzeichnet, dass** der Stellantrieb (15) durch einen mit einem Druckmedium einfach- beaufschlagbaren Stellzylinder gebildet ist.

7. Steuerventil (14) nach Anspruch 4, **dadurch gekennzeichnet, dass** ein Übergangsbereich (47) zwischen der Regelkammer (31) und dem Ausgangskanal (36) eine die Durchströmöffnung (48) kreisringförmig umfassende, dem Ausgangskanal (36) zugewandte, Ventildichtfläche (44) ausbildet.

8. Steuerventil (14) nach Anspruch 7, **dadurch gekennzeichnet, dass** die Ventildichtfläche (44) in einer zu einer Längsmittelachse (26) der Regelkammer (31) senkrecht verlaufenden Ebene verläuft.

9. Steuerventil (14) nach einem der vorhergehenden Ansprüche 4-8, **dadurch gekennzeichnet, dass** der Ventilkolben (46) die Durchströmöffnung (48) durchragt und an einem in den Ausgangskanal (36) einragenden Endbereich (49) mit einem einen Ventilteller (51) ausbildenden Flansch (50) versehen ist.

10. Steuerventil (14) nach Anspruch 9, **dadurch gekennzeichnet, dass** am Flansch (50) und diesem umfangseitig umfassend ein Dichtring (52), insbesondere O- Ring (53) angeordnet ist.

11. Steuerventil (14) nach Anspruch 10, **dadurch gekennzeichnet, dass** ein Außendurchmesser (54) des Dichtringes (52) etwa den 60 bis 80% eines Durchmessers (30) der Bohrung (29) des Ausgangskanals (36) beträgt.

12. Steuerventil (14) nach einem der vorhergehenden Ansprüche 4-11, **dadurch gekennzeichnet, dass** das Ventilgehäuse (25) bevorzugt zwei mit der Regelkammer (31) strömungsverbundene Eingangskanäle (32) aufweist.

13. Steuerventil (14) nach Anspruch 12, **dadurch gekennzeichnet, dass** die Eingangskanäle (32) im Ventilgehäuse (25) durch einander konzentrisch gegenüberliegende Bohrungen (33, 34) gebildet sind und Mittelachsen der Eingangskanäle (32) etwa senkrecht zur Längsmittelachse (26) der Regelkammer (31) verlaufen.

14. Steuerventil (14) nach Anspruch 4 oder 5, **dadurch gekennzeichnet, dass** der Ventilkolben (46) mit einem Ankerfortsatz (56) in eine konzentrisch zur Bohrung (27) der Regelkammer (31) verlaufenden Ankerbohrung (57) des am Ventilgehäuses (25) angeordneten, als Steuermagnet (58) ausgebildeten, Stellantrieb (15) einragt.

15. Steuerventil (14) nach Anspruch 14, **dadurch gekennzeichnet, dass** die Federanordnung (62) durch eine den Ankerfortsatz (56) des Ventilkolbens (46) in einer dem Steuermagnet (58) zugewandten Aufnahmebohrung (59) des Ventilgehäuses (25) umfassende Spiraldruckfeder (61) gebildet ist.

16. Steuerventil (14) nach Anspruch 15, **dadurch gekennzeichnet, dass** die Spiraldruckfeder (61) zwischen einer Anlagefläche des Steuermagnets (58) und einem am Ventilkolben (46) ausgebildeten Flanschring (63) vorgespannt angeordnet ist.

17. Steuerventil (14) nach Anspruch 15 oder 16, **dadurch gekennzeichnet, dass** der Flanschring und ein die Aufnahmebohrung (59) begrenzender, in Richtung der Längsmittelachse (26) vorragender Anschlagring (64) eine Anschlaganordnung zur Begrenzung eines Verstellweges des Ventilkolbens (46) ausbilden.

18. Steuerventil (14) nach Anspruch 17, **dadurch gekennzeichnet, dass** die Federkraft der Spiraldruckfeder (61) kleiner ist als eine durch das Vakuum am Ventilteller (51) des Ventilkolbens (46) bewirkte Haltekraft in der Schließstellung.

19. Steuerventil (14) nach einem der vorhergehenden Ansprüche 15-18, **dadurch gekennzeichnet, dass** die Federkraft der Spiraldruckfeder (61) größer ist als ein am Ventilteller (51) in Öffnungsstellung anwirkender Strömungswiderstand bei Beaufschlagung mit dem Vakuum.

20. Steuerventil (14) nach einem der vorhergehenden Ansprüche 15-19, **dadurch gekennzeichnet, dass** die Spiraldruckfeder (61) in der Ankerbohrung (57) des Steuermagnet (58) angeordnet ist.

21. Steuerventil (14) nach Anspruch 4, **dadurch gekennzeichnet, dass** die Betätigung des Stellantriebes (15) durch ein mit einem Mediumsdruck beaufschlagtes Stellmittel erfolgt.

22. Steuerventil (14) nach Anspruch 4 oder 5, **dadurch gekennzeichnet, dass** der Stellantrieb (15) über einen Kontroller (16) eines Bus- Systems, bevorzugt zur Signal- und Energieübertragung, angesteuert und beaufschlagt wird.

## Claims

1. Gripper head (1) with at least two vacuum grippers (4, 5), in particular for a manipulator (3) for holding and/or manipulating a workpiece (19), e.g. a sheet metal blank (20), moulded sheet metal part, etc., with a control valve (14) for each vacuum gripper (4, 5), a valve housing (25) constituting a regulating chamber (31) with at least one inlet passage (32) establishing a flow connection to the regulating chamber (31) and an outlet passage (36) establishing a flow connection to the regulating chamber (31), and a valve piston (46) disposed in the regulating chamber (31) which can be displaced between a position closing or opening a passage orifice (48) between the regulating chamber (31) and outlet passage (36), and with an actuator drive (15) for the valve piston (46) disposed on the valve housing (25), and the control valves (14) disposed one after the other in series are directly connected to the pressure generator (22) via pressure lines (24) for switching a vacuum in order to supply the regulating chambers (31), and the valve piston (46) of the control valve (14) is held in the closed position by a retaining force of the actuator drive (15) and/or by an actuating force caused by a negative pressure acting on a valve disc (51) of the valve piston (46) blocking the passage orifice (48) opposing the action of a spring force of a spring arrangement (62) biasing the valve piston (46) in the opening direction, **characterised in that** the regulating chamber (31) and the outlet passage (36) are formed by concentric bores (27, 29) in the valve housing (25) merging with one another, and a cross-sectional surface of the outlet passage (36) around an annular surface is bigger than the cross-sectional surface of the regulating chamber (31) constituting the passage orifice (48) at which a flow resistance of the medium sucked in due to a negative pressure is lower than a spring force of the spring arrangement (62).

2. Gripper head (1) as claimed in claim 1, **characterised in that** the vacuum grippers (4, 5) are disposed on a gripper support (6) so that they can be adjusted and are connected to one another via flexible pressure lines (24) to establish a flow.

3. Gripper head (1) as claimed in claim 2, **characterised in that** the gripper support (6) is secured to a hinge joint (7) of a pivot arm (2) constituting a rotary transmitter (8) for a pressurising medium and/or control signals.

4. Control valve (14) for a vacuum gripper (4, 5) of a gripper head (1) provided with at least two vacuum grippers (4, 5) for holding and/or manipulating a workpiece (19), e.g. a sheet metal blank (20), moulded sheet metal part, etc., with a valve housing (25) constituting a regulating chamber (31) with at least one inlet passage (32) establishing a flow connection to the regulating chamber (31) and an outlet passage (36) establishing a flow connection to the regulating chamber (31), and a valve piston (46) disposed in the regulating chamber (31) which can be displaced between a position closing or opening a passage orifice (48) between the regulating chamber (31) and outlet passage (36), and with an actuator drive (15) for the valve piston (46) disposed on the valve housing (25), and the control valve (14) is connected to a pressure line (24) in order to supply the regulating chamber (31) and has a flow connection to a pressure generator (22), and the valve piston (46) of the control valve (14) is held in the closed position by a retaining force of the actuator drive (15) and/or by an actuating force caused by a negative pressure acting on a valve disc (51) of the valve piston (46) blocking the passage orifice (48) opposing the action of a spring force of a spring arrangement (62) biasing the valve piston (46) in the opening direction, **characterised in that** the regulating chamber (31) and the outlet passage (36) are formed by concentric bores (27, 29) in the valve housing (25) merging with one another, and a cross-sectional surface of the outlet passage (36) around an annular surface is bigger than the cross-sectional surface of the regulating chamber (31) constituting the passage orifice (48) at which a flow resistance of the medium sucked in due to a negative pressure is lower than a spring force of the spring arrangement (62).

5. Control valve (14) as claimed in claim 4, **characterised in that** the actuator drive (15) is provided in the form of an electrically operable control magnet (58) on the valve housing.

6. Control valve (14) as claimed in claim 4, **characterised in that** the actuator drive (15) is provided in the form of an actuator cylinder to which a pressurising medium can be applied.

7. Control valve (14) as claimed in claim 4, **characterised in that** a transition region (47) between the regulating chamber (31) and outlet passage (36) forms a valve seal surface (44) facing the outlet passage (36) enclosing the flow passage orifice (48) in an annular arrangement.

8. Control valve (14) as claimed in claim 7, **characterised in that** the valve seal surface (44) extends in a plane extending perpendicular to a longitudinal mid-axis (26) of the regulating chamber (31).

9. Control valve (14) as claimed in one of preceding claims 4 - 8, **characterised in that** the valve piston (46) extends through the flow orifice (48) and is provided with a flange (50) constituting a valve disc (51) at an end region (49) extending into the outlet passage (36).

10. Control valve (14) as claimed in claim 9, **characterised in that** a sealing ring (52), in particular an O-ring (53) is disposed on the flange (50) enclosing it circumferentially.

11. Control valve (14) as claimed in claim 10, **characterised in that** an external diameter (54) of the sealing ring (52) is approximately 60 to 80% of a diameter (30) of the bore (29) of the outlet passage (36).

12. Control valve (14) as claimed in one of preceding claims 4 - 11, **characterised in that** the valve housing (25) preferably has two inlet passages (32) establishing a flow connection to the regulating chamber (31).

13. Control valve (14) as claimed in claim 12, **characterised in that** the inlet passages (32) in the valve housing (25) are provided in the form of bores (33, 34) lying concentrically opposite one another and mid-axes of the inlet passages (32) extend approximately perpendicular to the longitudinal mid-axis (26) of the regulating chamber (31).

14. Control valve (14) as claimed in claim 4 or 5, **characterised in that** the valve piston (46) extends by means of an armature projection (56) into an armature bore (57) of the actuator drive (15), provided in the form of a control magnet (58) disposed on the valve housing (25), extending concentrically with the bore (27) of the regulating chamber (31).

15. Control valve (14) as claimed in claim 14, **characterised in that** the spring arrangement (62) comprises a helical compression spring (61) extending around the armature projection (56) of the valve piston (46) in a receiving bore (59) of the valve housing (25) facing the control magnet (58).

16. Control valve (14) as claimed in claim 15, **characterised in that** the helical compression spring (61) is biased between a contact surface of the control magnet (58) and a flange ring (63) disposed on the valve piston (46).

17. Control valve (14) as claimed in claim 15 or 16, **characterised in that** the flange ring and a stop ring (64) projecting in the direction of the longitudinal mid-axis (26) bounding the receiving bore (59) serve as a stop arrangement for restricting a displacement path of the valve piston (46).

18. Control valve (14) as claimed in claim 17, **characterised in that** the spring force of the helical compression spring (61) is weaker than a retaining force generated by the vacuum at the valve disc (51) of the valve piston (46) in the closed position.

19. Control valve (14) as claimed in one of preceding claims 15 - 18, **characterised in that** the spring force of the helical compression spring (61) is stronger than a flow resistance acting on the valve disc (51) in the open position when placed under vacuum.

20. Control valve (14) as claimed in one of preceding claims 15 - 19, **characterised in that** the helical compression spring (61) is disposed in the armature bore (57) of the control magnet (58).

21. Control valve (14) as claimed in claim 4, **characterised in that** the actuator drive (15) is operated by an actuator means to which a pressurised medium is applied.

22. Control valve (14) as claimed in claim 4 or 5, **characterised in that** the actuator drive (15) is actuated and pressurised via a controller (16) of a bus system, preferably for transmitting signals and energy.

## Revendications

1. Tête de préhension (1) avec au moins deux ventouses (4, 5), en particulier pour un manipulateur (3) pour le logement et/ou la manipulation d'une pièce à usiner (19), par exemple une pièce découpée en tôle (20), une pièce formée en tôle, etc., avec une soupape de commande (14) par ventouse (4, 5), avec un boîtier de soupape (25) formant une chambre de réglage (31) avec au moins un canal d'entrée (32) relié au niveau de l'écoulement à la chambre de réglage (31) et avec un canal de sortie (36) relié au niveau de l'écoulement à la chambre de réglage (31) et avec le piston de soupape (46) disposé dans la chambre de réglage (31), pouvant être déplacé entre une position de fermeture ou une position d'ouverture d'une ouverture de passage (48) entre la chambre de réglage (31) et le canal de sortie (36) et avec un servomoteur (15) disposé sur le boîtier de soupape (25) pour le piston de soupape (46) et les soupapes de commande (14) étant reliées pour le déplacement d'un vide pour l'alimentation des chambres de réglage (31) au générateur de pression (22) et les unes derrière les autres en série directement par des conduites de pression (24) et le piston de soupape (46) de la soupape de commande (14) étant maintenu dans la position de fermeture par une force de retenue du servomoteur (15) et/ou par une force de réglage, provoquée par dépression, agissant sur une tête de soupape (51), bloquant l'ouverture de passage (48) du piston de soupape (46), dans le sens contraire à l'effet d'une force de ressort, sollicitant le piston de soupape (46) dans le sens d'ouverture, d'un agencement à ressort (62), **caractérisée en ce que** la chambre de réglage (31) et le canal de sortie (36) sont réalisés par des alésages (27, 29) concentriques et s'emboîtant les uns dans les autres dans le boîtier de soupape (25) et une surface de section du canal de sortie (36) étant supérieure d'une surface annulaire à la surface de section, formant l'ouverture de passage (48), de la chambre de réglage (31), sur laquelle une résistance à l'écoulement, entraînée par une dépression, du fluide aspiré est inférieure à une force de ressort de l'agencement à ressort (62).

2. Tête de préhension (1) selon la revendication 1, **caractérisée en ce que** les ventouses (4, 5) sont disposées de façon réglable sur un support de ventouse (6) et sont reliées les unes aux autres au niveau de l'écoulement par des conduites de pression (24) flexibles.

3. Tête de préhension (1) selon la revendication 2, **caractérisée en ce que** le support de ventouse (6) est fixé sur une articulation rotative (7), conçue comme transmetteur de rotation (8) pour un fluide de pression et/ou des signaux de commande, d'un bras articulé (2).

4. Soupape de commande (14) pour une ventouse (4, 5) d'une tête de préhension (1) dotée d'au moins deux des ventouses (4, 5) pour le logement et/ou la manipulation d'une pièce à usiner (19), par exemple une pièce découpée en tôle (20), une pièce formée en tôle, etc., avec un boîtier de soupape (25) formant une chambre de réglage (31), avec au moins un canal d'entrée (32) relié au niveau de l'écoulement à la chambre de réglage (31) et avec un canal de sortie (36) relié au niveau de l'écoulement à la chambre de réglage (31) et avec le piston de soupape (46) disposé dans la chambre de réglage (31), déplaçable entre une position de fermeture ou une position d'ouverture d'une ouverture de passage (48) entre la chambre de réglage (31) et le canal de sortie (36) et avec un servomoteur (15) disposé sur le boîtier de soupape (25) pour le piston de soupape (46) et la soupape de commande (14) étant raccordée pour l'alimentation de la chambre de réglage (31) à une conduite de pression (24) et étant reliée au niveau de l'écoulement à un générateur de pression (22) et le piston de soupape (46) de la soupape de commande (14) étant maintenu dans la position de fermeture par une force de retenue du servomoteur (15) et/ou par une force de réglage, agissant sur une tête de soupape (51), bloquant l'ouverture de passage (48), du piston de soupape (46), provoquée par dépression, dans le sens contraire à l'effet d'une force de ressort, sollicitant le piston de soupape (46) dans le sens d'ouverture, d'un agencement à ressort (62), **caractérisée en ce que** la chambre de réglage (31) et le canal de sortie (36) sont conçus par des alésages (27, 29) concentriques et s'emboîtant les uns dans les autres dans le boîtier de soupape (25) et une surface de section du canal de sortie (36) étant supérieure d'une surface annulaire à la surface de section, formant l'ouverture de passage (48), de la chambre de réglage (31), sur laquelle une résistance à l'écoulement, provoquée par une dépression, du fluide aspiré est inférieure à une force de ressort de l'agencement à ressort (62).

5. Soupape de commande (14) selon la revendication 4, **caractérisée en ce que** le servomoteur (15) est formé par un aimant de commande (58) pouvant être alimenté électriquement et disposé sur le boîtier de soupape.

6. Soupape de commande (14) selon la revendication 4, **caractérisée en ce que** le servomoteur (15) est formé par un cylindre de réglage pouvant être alimenté de façon simple par un fluide de pression.

7. Soupape de commande (14) selon la revendication 4, **caractérisée en ce qu'**une zone de transition (47) entre la chambre de réglage (31) et le canal de sortie (36) forme une surface d'étanchéité de soupape (44) comprenant l'ouverture d'écoulement (48) en forme de bague circulaire et tournée vers le canal de sortie (36).

8. Soupape de commande (14) selon la revendication 7, **caractérisée en ce que** la surface d'étanchéité de soupape (44) est agencée dans un plan disposé perpendiculairement à un axe médian longitudinal (26) de la chambre de réglage (31).

9. Soupape de commande (14) selon l'une des revendications précédentes 4 à 8, **caractérisée en ce que** le piston de soupape (46) traverse l'ouverture de passage (48) et est doté, sur une zone d'extrémité (49) dépassant dans le canal de sortie (36), d'une bride (50) formant une tête de soupape (51).

10. Soupape de commande (14) selon la revendication 9, **caractérisée en ce qu'**une bague d'étanchéité (52), en particulier un joint torique (53), est disposée sur la bride (50) et en englobant celle-ci côté pourtour.

11. Soupape de commande (14) selon la revendication 10, **caractérisée en ce qu'**un diamètre extérieur (54) de la bague d'étanchéité (52) représente environ les 60 à 80 % d'un diamètre (30) de l'alésage (29) du canal de sortie (36).

12. Soupape de commande (14) selon l'une des revendications précédentes 4 à 11, **caractérisée en ce que** le boîtier de soupape (25) présente de préférence deux canaux d'entrée (32) reliés au niveau de l'écoulement à la chambre de réglage (31).

13. Soupape de commande (14) selon la revendication 12, **caractérisée en ce que** les canaux d'entrée (32) dans le boîtier de soupape (25) sont formés par des alésages (33, 34) se faisant face de façon concentrique et des axes médians des canaux d'entrée (32) sont agencés à peu près perpendiculairement à l'axe médian longitudinal (26) de la chambre de réglage (31).

14. Soupape de commande (14) selon la revendication 4 ou 5, **caractérisée en ce que** le piston de soupape (46) dépasse avec un prolongement d'induit (56) dans un alésage d'induit (57), agencé de façon concentrique par rapport à l'alésage (27) de la chambre de réglage (31), du servomoteur (15) disposé sur le boîtier de soupape (25) et conçu comme aimant de commande (58).

15. Soupape de commande (14) selon la revendication 14, **caractérisée en ce que** l'agencement à ressort (62) est formé par un ressort de pression en spirale (61) comprenant le prolongement d'induit (56) du piston de soupape (46) dans un alésage de logement (59), tourné vers l'aimant de commande (58), du boîtier de soupape (25).

16. Soupape de commande (14) selon la revendication 15, **caractérisée en ce que** le ressort de pression en spirale (61) est disposé de façon pré-tendue entre une surface d'appui de l'aimant de commande (58) et une bague à bride (63) formée sur le piston de soupape (46).

17. Soupape de commande (14) selon la revendication 15 ou 16, **caractérisée en ce que** la bague à bride et une bague de butée (64), délimitant l'alésage de logement (59) et dépassant en direction de l'axe médian longitudinal (26), forment un agencement de butée pour la délimitation d'une course de réglage du piston de soupape (46).

18. Soupape de commande (14) selon la revendication 17, **caractérisée en ce que** la force de ressort du ressort de pression en spirale (61) est inférieure à une force de retenue, provoquée par le vide sur la tête de soupape (51) du piston de soupape (46), dans la position de fermeture.

19. Soupape de commande (14) selon l'une des revendications précédentes 15 à 18, **caractérisée en ce que** la force de ressort du ressort de pression en spirale (61) est supérieure à une résistance à l'écoulement agissant sur la tête de soupape (51) dans la position d'ouverture en cas d'alimentation avec le vide.

20. Soupape de commande (14) selon l'une des revendications précédentes 15 à 19, **caractérisée en ce que** le ressort de pression en spirale (61) est disposé dans l'alésage d'induit (57) de l'aimant de commande (58).

21. Soupape de commande (14) selon la revendication 4, **caractérisée en ce que** l'actionnement du servomoteur (15) s'effectue par un moyen de réglage alimenté avec une pression de fluide.

22. Soupape de commande (14) selon la revendication 4 ou 5, **caractérisée en ce que** le servomoteur (15) est actionné et alimenté au moyen d'un contrôleur (16) d'un système de bus, de préférence pour la transmission de signal et d'énergie.
